# EUROPEAN PATENT APPLICATION

(11) **EP 4 086 075 A1**
(43) Date of publication of application: **09.11.2022**
(21) Application number: 21172487.7
(22) Date of filing: 06.05.2021
(51) Int. Cl.: B32B 27/08, B32B 27/30, B32B 27/32

(54) **SUSTAINABLE MULTILAYER FILM**

(71) Applicant: Trioworld Apeldoorn B.V., 7300 AB Apeldoorn (NL)
(72) Inventor: SCHUTTERT, Mathijs, 7300 AB Apeldoorn (NL); STEVELS, Jolien, 7300 AB Apeldoorn (NL)
(74) Representative: AWA Sweden AB

(57) **Abstract**

A multilayer film comprises a first outer layer, a second outer layer, a layer A arranged between said outer layers, a layer B arranged between said outer layers, and at least one central layer arranged between said layer A and said layer B, wherein the film comprises a recycled post-consumer waste material at a content of 5-50 % by weight based on the total weight of the film, wherein said recycled post-consumer waste material comprises i) at least 80 % by weight of LLDPE and 0-10 % by weight of LDPE based on the total weight of the recycled post-consumer waste material; ii) at least one propylene-containing polymer selected from random propylene ethylene copolymer, a polypropylene homopolymer and a polypropylene heterophasic random copolymer, at a content of from 1 to 25 % by weight based on total weight of the film; and iii) a virgin LLDPE. The multilayer film is useful as stretch film, such as pallet stretch wrap.

## Description

### Field of the invention

The present invention relates to a multilayer film comprising recycled polyethylene material, to a process of producing such film, and to use of the film for stretch wrap applications.

### Background

Plastic film is frequently used in different fields of application, in particular for wrapping various products, for example wrapping goods for shipping or storing, and specifically to wrap goods placed or stacked on a pallet. Such films are referred to as stretch wrap or stretch film.

Stretch wrap films used for e.g. pallet wrapping are typically very thin, yet must have a high degree of stretchability, as well as certain mechanical characteristics, e.g. in terms of tear resistance and puncture resistance. During packaging and during transport the stretch film is exposed to certain forces which it should withstand. By way of example, a good stretch film should be resistant to puncture and tear and should have adequate tensile strength and elasticity. When used to wrap an object, the films is stretched prior to application around the object to be wrapped. In so-called high performance pallet wrapping, the film is typically stretched at least 150 %, and often 200 % or more, before being wound around a palletized load.

When developing a stretch film there are several design requirements to be considered. For example, the stretch film should be able to exert a high force on the goods to be packaged, in order to wrap them tightly together. This "force on load" is an important design consideration or functional property of the stretch film. Another design requirement is that the stretch film provides a high "load stability". When subjected to accelerations or decelerations, e.g. during transport, the stacked goods should not slide off or tilt off the pallet, and after such acceleration or deceleration the stack of goods should preferably return to its original position and shape.

Another important design consideration is the amount of stretch or elongation that the film allows for. If the amount of stretch is high, a relatively long wrapping length is obtained for each unit length of film. And finally, tear resistance under conditions of use is an important functional property of the stretch film. The film should still have a high tear resistance after it has been stretched during wrapping, i.e. in its stretched condition.

Current standard high performance stretch wrap films consist mainly of virgin plastic material, in particular metallocene linear low density polyethylene (mLLDPE).The plastics industry is today increasingly striving to reduce its negative effects on environment and its contribution to global warming caused by consumption of fossile raw material and ultimately the carbon dioxide emission and "carbon footprint" of its products. One way to improve sustainability in this context is to reduce the overall consumption of raw fossile material by using alternative, renewable materials, improving recyclability of the products, or, in the case of plastic film, making thinner and lighter films requiring less material. It has also been proposed to use recycled plastic material as a starting material for making plastic products such as film.

In general, recycled plastic material may derive from industrial sources, called post-industrial recycled material (PIR), or from discarded consumer plastic products, (post-consumer recycled material, PCR). The composition and quality of PIR and PCR may differ greatly, PCR being of lower quality. PCR material usually comprises polymers from diverse sources, thereby giving the recycled polymeric material poor or unwanted predicted mechanical properties. As an example, recycled plastic material usually contains impurities, which have an effect on the mechanical properties of a produced film, and unmelted particles, which may easily cause problems during film manufacture, especially for blown film manufacturing. Thus, PCR material has been regarded as unsuitable for incorporation into thin films for stretch wrap applications, such as films having a thickness around or below 25 µm.

Despite advancements made in recent years, there remains a need for polymer films, in particular films useful as high performance stretch wrap, having a lower environmental or climate impact without loss in functional properties.

### Summary of the invention

It is an object of the present invention to overcome this problem, and to provide a more sustainable multilayer film that is useful as a stretch film, in particular a high performance stretch film for pallet wrapping.

According to a first aspect of the invention, this and other objects are achieved by a multi-layer film comprising a first outer layer, a second outer layer, a layer A arranged between said outer layers, a layer B arranged between said outer layers, and at least one central layer arranged between said layer A and said layer B, wherein the film comprises i) a recycled post-consumer waste material at a content of from 5 to 80 % by weight based on the total weight of the film, wherein said recycled post-consumer waste material comprises at least 80 % by weight of linear low density polyethylene (LLDPE) and from 0 % to 10 % by weight of low density polyethylene (LDPE) based on the total weight of the recycled post-consumer waste material; ii) at least one propylene-containing polymer selected from random propylene ethylene copolymer, a polypropylene homopolymer and a polypropylene heterophasic random copolymer, at a content of from 1 to 25 % by weight based on total weight of the film; and iii) a virgin linear low density polyethylene (LLDPE).

As explained below, "recycled post-consumer waste material" is used herein to describe polyethylene material that has been previously incorporated into one or more products and optionally used for its intended purpose, and then collected and processed in a recycling process by the original manufacturer or one or more other entities to produce a PCR material. Hence, the recycled post-consumer waste material has previously been incorporated into one or more end products, collected and typically processed in a recycling process.

The present inventor found that the composition of the post-consumer recycled polyethylene material, referred herein to as PCR-PE, incorporated in the film has a significant impact on the force required to stretch the film and the maximum elongation capacity of the film. However, even when using a PCR-PE that provides an acceptable stretch force and elongation capacity, it was surprisingly found that the desired stretch wrap functionality was only achieved if at least one layer of the film other than any of the outer layers contained a propylene-containing polymer as described herein. By including a propylene-containing polymer in one or more of the interior film layers, the film has been found to withstand the tension experienced duing the wrapping operation and can thus be wrapped tightly around a load without breaking.

It was found that if the PCR-PE material contains more than 10 % of low density polyethylene (LDPE), the desired maximum elongation capacity was not acquired. It was also found that using a PCR-PE having a hight content of linear low density polyethylene (LLDPE) such as at least 85 or 90 %, an acceptable stretch force and sufficient maximum elongation can be achieved. Hence, the combination of a PCR-PE having a high content of LLDPE and not more than 10 % of LDPE, and a propylene-containing polymer, provides a stretch film with excellent properties and functionality, despite the PCR-PE being incorporated at a high content at the expense of virgin polyethylene material such as LLDPE.

The multilayer film may comprise recycled post-consumer waste material at a content of from 15 to 70 or 80 % by weight, such as at least 20 %, at least 30 % or at least 40 % by weight, such as 30-80 % by weight, 40-80 % by weight, 30-70 % by weight, or 50-70 % by weight, based on the total weight of the film.

The propylene-containing polymer, selected from a random propylene ethylene copolymer, a polypropylene homopolymer and a polypropylene heterophasic random copolymer, may be present at a content of from 5 % to 20 % by weight, preferably from 10 % to 20 %, based on the total weight of the film. This amount excludes any propylene-containing polymer present in the outer layers. The propylene-containing polymer may have a density in the range of 0.85-0.91 g/cm³, preferably from 0.87-0.91 g/cm³, more preferably from 0.880-0.910 g/cm³, such as from 0.885-0.910 g/cm³, such as from 0.885-0.905 g/cm³. The propylene-containing polymer may have a melt mass-flow rate (MFR) measured at 230 °C in the range of from 2 to 10 g/10min, such as from 4 to 10 g/10min, such as from 6 to 10 g/10min, such as from 6 to 8 g/10min. In embodiments, the propylene-containing polymer may be a random propylene ethylene copolymer.

In embodiments, at least one of the at least one central layer, layer A and layer B comprises said recycled post-consumer waste material. Alternatively or additionally, at least one of the at least central layer, layer A and layer B may comprise virgin linear low density polyethylene.

The first outer layer may comprise linear low density polyethylene and a tackifier.

The first outer layer may have a thickness of from 5 to 15 % of the film; and the second outer layer may have a thickness of from 5 to 15 % of the film.

The at least one central layer may comprise a layer C, a layer D, and a core layer arranged between layers C and D. In such embodiments, layer C may comprise the propylene-containing polymer. Optionally, layer C may further comprise virgin linear low density polyethylene. Alternatively or additionally, layer C may further comprise said recycled post-consumer waste material. The core layer, layer A and layer B may have a total thickness making up from 55 to 65 % of the film.

Each of layers C and D may independently have a thickness of from 5 to 15 % of the film.

In embodiments, the film may comprise a plurality of microlayers. By the term "microlayer" is meant an individual layer that form 1 % or less of the total film thickness. In contrast, a "regular" layer that is not a microlayer, typically constitutes at least 5 % of the total film thickness, and often at least 10 %. An individual microlayer may have a thickness of 1 µm or less. The individual microlayers are typically provided in a stacked configuration, e.g. of 10 or more microlayers, thus forming at least one set of microlayers provided between non-microlayer layers of the film.

Layer C may be arranged between the core layer and layer A and may comprise alternating microlayers of a first type of microlayer and a second type of microlayer. Correspondingly, layer D may be arranged between the core layer and the layer B and may comprise alternating microlayers of the first type of microlayer and the second type of microlayer. In embodiments, both layers C and D may comprise microlayers. Such an at least one group of microlayers may provide an enlarged synergistic effect of microlayers and/or may distribute the properties of different layers along the thickness of the multilayer film. Accordingly or alternatively such an at least one group of microlayers may improve functional properties of the multilayer stretch film. The use of a core layer may allow for a certain structural rigidity, whilst the two groups of microlayers adjacent the core, may provide additional desired characteristics, amongst which may be improved functional properties.

In embodiments, each microlayer of the first type of microlayer may comprise the at least one propylene-containing polymer at a content of at least 90 % by weight of the microlayer, such as at a content of at least 95 % by weight of the microlayer.

In embodiments, each microlayer of the second type of microlayer may comprise virgin linear low density polyethylene at a content of at least 90% by weight of microlayer, such as at a content of 95 % by weight of the microlayer. Alternatively, each microlayer of the second type of microlayer may comprises recycled post-consumer waste material at a content of at least 90% by weight of the microlayer, such as at a content of 95 % by weight of the microlayer.

The PCR material used in the film according to the invention may comprise linear low density polyethylene at a content of at least 85% by weight of the recycled post-consumer waste material, such as of at least 90 % by weight of the recycled post-consumer waste material. The recycled post-consumer waste material may preferably comprise less than 5 %, such as from 0 % to 5 %, by weight of LDPE based on the total weight of the recycled post-consumer waste material.

The recycled post-consumer waste material may have a density in the range of 0.91-0.94 g/cm³, and/or a melt mass-flow rate measured at 190 °C in the range of from 1.8 to 2.2 g/10min.

Polyethylene films containing PCR material typically contain a certain amount of impurities, referred to as "gels". Gels are generally regarded as undesirable, since they represent weak spots in the film and conceived as detrimental to the quality and performance of the film. Surprisingly, however, it was found that the present invention resulted in a PCR-containing film with improved functionality as a high performance stretch film, despite a maintained, high gel count. The multilayer film of the present invention may have a gel count in the range of from 5,000 to 30,000 gels/100 m² (determined as described in Example 1 below).

The virgin linear low density polyethylene used in the film of the present invention may be a metallocene linear low density polyethylene.

The film of the invention may have a maximum elongation of at least 325 % as determined using the Highlight Test Stand Ultimate test as described herein. The stretch force required to stretch the film, as determined using the Highlight Test Stand Ultimate test, may be in the range of from 24 to 32 kg.

The invention further relates to a method for manufacturing a multi-layer film as described herein comprising the steps of:
- providing a first extrudable composition comprising at least one polymer;
- providing a second extrudable composition comprising at least one polymer;
   providing a third extrudable composition comprising at least one polymer;
- providing at least one fourth extrudable composition comprising at least one polymer;
- extruding the first extrudable composition to form layer A and/or layer B of the multilayer film;
- extruding the second extrudable composition to form the first outer layer of the multilayer film;
- extruding the third extrudable composition to the second outer layer of the multilayer film;
- extruding at least the fourth extrudable composition to form the at least one central layer of the multilayer film.

The polymers of the extrudable compositions are typically polyolefins, such as polyethylene, polypropylene and copolymers of ethylene and propylene.

The method may further comprise a step of providing a recycled post-consumer waste polyethylene material as defined herein, wherein said recycled post-consumer waste polyethylene material represents at least one polymer of one or more of the above-mentioned extrudable compositions, in particular at least one of said first extrudable composition and said fourth extrudable composition.

In embodiments, the method may comprise providing and extruding a fifth extrudable composition to form one of layers A and B (the one not formed by the first extrudable composition).

In embodiments, at least one polymer of at least one extrudable composition is a propylene-containing polymer selected from a random propylene ethylene copolymer, a polypropylene homopolymer and a polypropylene heterophasic random copolymer, present at a content of 1-25 % by weight based on total weight of the multilayer film formed by the method.

The extrudable compositions may be coextruded in a cast film extrusion process. Alternatively, the extrudable compositions may be co-extruded in a blow film extrusion process.

The invention also provides the use of the multilayer film as a stretch wrap film, in particular as pallet wrap. Upon wrapping, the film is typically prestretched by at least 150 %, such as at least 200 %, such as at least 250 % relative to the unstretched film length.

The film if the present application may be referred to as a stretch film. The term "stretch film" means a film that is capable of elastic and/or plastic deformation by stretching during use (e.g. wrapping an object). A stretch film is adapted to retain its qualities upon stretching, or at least retain an acceptable quality. A stretch film typically has an elongation at break as determined according to ISO 527-3 of at least 200 %, and often higher, such as 250 % or more. When used for wrapping palletized goods, the holding force of the wrapped film is of importance the holding force is related to the force required to stretch the film. For example, for a high performance stretch wrap having a thickness of 20 µm, the force required to stretch the film by 200 % is typically in the range of from 24 to 32 kg, as measured using the Highlight stretch film test stand (Highlight Industries, Inc., USA).

Accordingly, the invention provides a method of wrapping an object, such as a pallet, comprising the steps of
a) providing a film as described herein;
b) stretching said film by at least 150 % to form a pre-stretched film;
c) applying the pre-stretched film under tension around the object.

In step b, the film may be stretched by 200 % or more, such as 250 % or more, such as 270 % or more. The film may be applied around the object using a stretch force of from 8 to 11 kg.

The object to be wrapped may be a stack of articles.

It is noted that the invention relates to all possible combinations of features recited in the claims.

### Brief description of the drawings

This and other aspects of the present invention will now be described in more detail, with reference to the appended drawings showing embodiment(s) of the invention, in which:
Figure 1 schematically shows the layer structure of a multilayer film according to embodiments of the invention.
Figure 2 schematically shows the structure of a multilayer film having at least 7 layers, according to embodiments of the invention.
Figure 3A-C illustrates the structure of a multilayer film comprising microlayers, according to embodiments of the invention.

As illustrated in the figures, the sizes of layers may be exaggerated for illustrative purposes and, thus, are provided to illustrate the general structures of embodiments of the present invention. Like reference numerals refer to like elements throughout.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

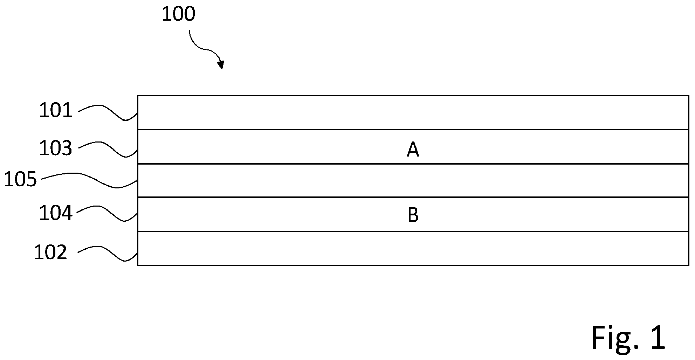

Figure 1 shows an example of a multilayer film according to embodiments of the invention. The film 100 comprises a first outer layer 101 and a second outer layer 102, also referred to as skin layers, which form the exterior surface s of the film. Between the outer layers 101, 102 are provided a layer 103, also referred to as layer A, and a layer 104, also referred to as layer B. Layers A and B are intermediate layers, sandwiched by the outer layers. Between layers A and B is provided at least one central layer 105.

In embodiments, all layers may be based on polyolefins, in particular polyethylene, polypropylene, and/or copolymers of ethylene and propylene. In embodiments, one or more of the intermediate layers and the central layer may essentially consist of polyethylene. For example, each of the intermediate layers A, B may consist of polyethylene.

The outer layers of the film may comprise polyethylene, especially LLDPE or VLDPE. For example, the first outer layer 101 may comprise linear low density polyethylene, such as virgin metallocene LLDPE (mLLDPE), at a content of at least 80 %, such as at least about 90 % orat least 95 % by weight of the total weight of the layer. For example, the LLDPE may be a virgin mLLDPE having a density of 0.918 g/cm³ and a melt-mass-flow rate (MFR) of 3.5 g/10min as measured at 190°C.

The outer layer 101 may be a cling layer. When cling properties are desirable, the outer layer may comprise from 5 to 20 %, such as about 10 % by weight of a tackifier, based on the weight of the layer. Suitable tackifiers are known in the art. For example, the tackifier may be a random propylene-ethylene copolymer (RcPP). As an example, an RcPP tackifier may have a density in the range of from 0.862 to 0.865 g/cm³. An RcPP suitable as a tackifier may have an MFR of from 8 to 10 g/10min, such as from 8 to 9.1 g/10min (measured at 190°C). The RcPP may have an ethylene comonomer content in the range of 15% to 24 %.

The second outer layer 102 may comprise or consist of linear low density polyethylene, such as virgin mLLDPE. The density of the LLDPE of the second outer layer 102 may be higher than the desity of the LLDPE of the first outer layer 101. In an example, the second outer layer may comprise mLLDPE having a density of 0.927 g/cm³ and a MFR of 3.5 g/10min as measured at 190°C. The second outer layer 102 may serve as a slip layer. In embodiments, the second outer layer may comprise or consist of a propylene-containing polymer, such as a random propylene ethylene copolymer. Optionally, the second outer layer may further comprise a slip agent.

Each of the outer layers 101, 102 may constitute from 2 to 20 %, such as from 5 to 15 %, such as about 10 %, of the total film thickness.

The polyolefin content of at least one of the the outer layers may be exclusively virgin materials. Optionally, at least one of the outer layers is free of recycled post-consumer waste polyethylene material. Optionally, both outer layers are free of PCR material. In this context, "free of" means that no PCR material is contained in said layer, by the fact that no PCR material is added to the melt extruded by the extruder in question during production of the film.

Layers A and B are based on LLDPE, and may comprise mLLDPE at a content of up to 100 % by weight of the layer. The mLLDPE used in layers A and B may have a density of 0.918 g/cm³ and a MFR of 3.5 g/10min as measured at 190°C.

Either one, or both, of the layers A and B may comprise PCR-PE. Typically, either one or each of layers A and B may comprise a blend of mLLDPE and PCR-PE. For instance, layer A and layer B may each comprise about 50 % by weight of LLDPE and 50 % by weight of PCR-PE, based on the weigth of each layer. Layers A and B may have identical or different composition.

Each of layers A and B may form from 5 to 15 % of the total film thickness.

In embodiments, either layer A, layer B, or both layers A and B may comprise a propylene-containing poymer selected from the group consisting of a random propylene ethylene copolymer, a polypropylene random copolymer, a polypropylene homopolymer and a polypropylene heterophasic random copolymer. In such embodiments, the layer may contain a blend of polyethylene and the propylene-containing polymer. The polyetylene may be virgin polyethylene, in particular mLLDPE, or recylced polyethylene, such as PRC-PE, or a combination of such virgin and recycled polyethylene materials.

The at least one central layer 105 is provided between layers A and B, and together with layers A and B may form up to 80 % of the film thickness. The central layer 105 may comprise virgin mLLDPE at a content of from 0 to 100 % by weight of the layer, such as from 0 % to 70 %, such as from 30 % to 50 %. The central layer may comprise PCR-PE at a content of from 30 %, such as at least 50 %, such as at least 60 %, such as at least 70 % by weight of the layer. In such embodiments, the central layer may comprise a blend of mLLDPE and PCR-PE. In embodiments, the content of PCR-PE in the central layer may be up to 100 %.

The PCR-PE used in any of the layers of the film has a content of LDPE of at most 10 % by weight, the rest being essentially linear low density polyethylene, with minor amount of impurities. The PCR-PE used in the film of the invention may have a density of from 0.916 to 0.920 g/cm³, such as 0.917 g/cm³ and a MFR of 1.8 from 2.6 g/10min such as 2.4 g/10min (measured at 190°C).

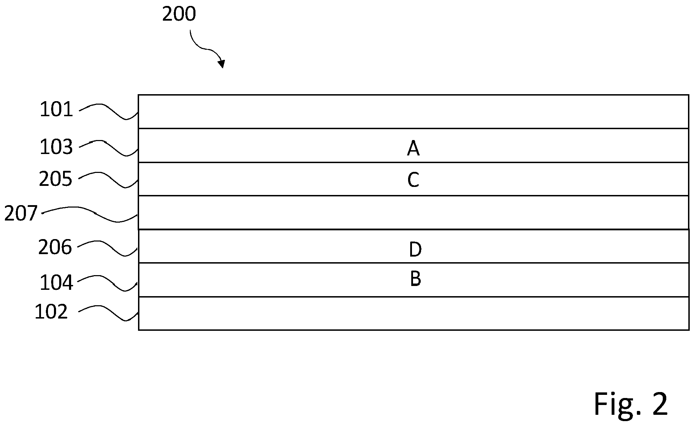

In embodiments, the at least one central layer may comprise a further layer C, a further layer D, and a core layer provided between the layer C and layer D, as illustrated in Figure 2. As shown in this figure, a multilayer film 200 according to embdiments of the invention may comprise, in addition to layers 101, 102, 103, 104 as described above, a further intermediate layer 205, also referred to as layer C, a further intermediate layer 206, also referred to as layer D, and a core layer 207. The core layer 207 may have a composition as described above for the central layer in relation to Figure 1.

Either one, or both, of the layers C and D may comprise LLDPE, in particular a virgin LLDPE, such as mLLDPE. In embodiments, the polyolefin content of the layers C and D may be exclusively virgin materials, that is, these layers may optionally be free of PCR material.

Either one, or both, of layers C and D may comprise the propylene-containing polymer at a content of from 40 % to 60 % such as about 50 % by weight, based the total weight of each layer C, D. Optionally, in such embodiments, layer A and/or layer B may be free of the propylene-containing polymer. In such embodiments, the polyolefin content of layers A and/or layer B may be polyethylene only, including PCR-PE as well as virgin polyethylene such as virgin mLLDPE.

Each of layer C and D may form from 10 % to 40 %, such as from 10 % to 30 %, such as from 10 % to 20 %, such as about 10 %, of the total film thickness. In embodiments, layer C and D may each form 10 % of the film thickness, layer A, layer B and the core layer may together form about 60 % of the film thickness, and each outer layer 101, 102 may form about 10 % of the film thickness.

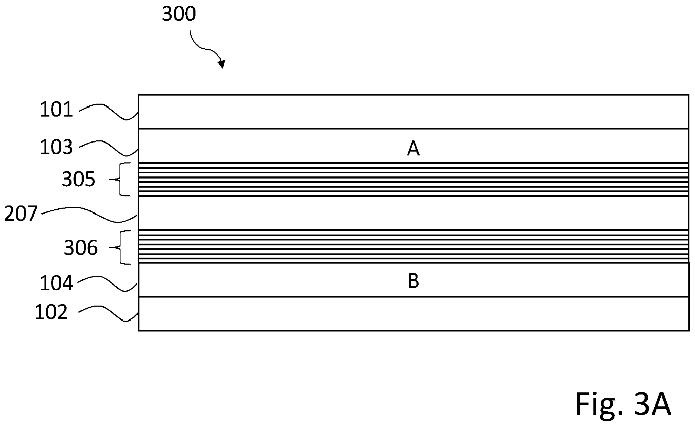

In embodiments, the film may comprise a plurality of microlayers, provided as at least one set of microlayers, such as two sets of microlayers. In an embodiment of the invention illustrated in Figures 3A-C, each of layers C and D described above is represented by a plurality of microlayers.

Figure 3A shows a film 300 comprising outer layers 101, 102, intermediate layers 103, 104, and a core layer 207, all of which may be as decribed above.

Further, two sets of microlayers 305, 306 are provided on either side of the core layer 207. In detail, a first plurality of microlayers 305 is provided between the core layer 207 and layer A, and a second plurality of microlayers 306 is provided between the core layer 207 and layer B. It is however contemplated that the sets of microlayers 305, 306 may be separated by further central layers in addition to core layer 207. Hence, in embodiments, there may be one or more other layers provided between the core layer and each set of microlayers.

Each microlayer set 305, 306 may consist of from 10 to 27 microlayers. Together, the two sets of microlayers may contain from 22 to 52 microlayers The sets 305, 306 may contain an equal number of microlayers, or the two sets may contain different numbers of microlayers. In a preferred embodiment, each set 305, 306 has 11 microlayers. Within each set of microlayers, the individual microlayers are adjacent i.e. flat upon each other, without any intermediate layer that is not a microlayer.

Each set of microlayer 305, 306 may form from 10 to 40 %, such as from 10 to 30 %, such as about 10 % of the total film thickness. Such a minimum amount of relative thickness covered by microlayers may exhibit advantageous properties of the resulting film, which may include increased functional properties.

The microlayers may have the same or different composition. In embodiments, the microlayers are made up of two or more different types of microlayers. For example, the microlayers may be of two different types: a first type of microlayer and a second type of microlayer. The different types of microlayer typically have different composition. Microlayers of different types may be of equal or different thickness. In embodiments, the first type of microlayer and the second type of microlayer may be of equal thickness. The microlayers of the first type may together form about 10 % of the total film thickness. The microlayers of the second type may together form from 8 % to 12 %, such as about 10 % of the total film thickness.

In embodiments, a first type of microlayer may comprise or consist of linear low density polyethylene, in particular virgin LLDPE such a mLLDPE. In embodiments, the first type of microlayers may comprise or consist of PCR-PE as described herein.

In embodiments, a second type of microlayer may comprise of consist of a propylene-based polymer as described herein.

Optionally, the first type of microlayer and the second type of microlayer may have similar or identical compositions, although they form different layers by being extruded from different extruders. In such embodiments, both type of microlayers may comprise or consist of the propylene-containing polymer; for example, both type of microlayers may comprise a blend of polyethylene, in particular mLLDPE, and the propylene-containing polymer.

In embodiments, each set of microlayers may comprise microlayers of a first type as well as microlayers of a second type. Microlayers of different type, typically of different composition, may be provided in interspersed fashion, such as an alternating fashion. In this way the properties of the various layers are distributed or preferably uniformly distributed. There may be an equal amount of first microlayers and second microlayers, or there may be one more or one less first microlayer than second microlayers in one such alternating arrangement of microlayers.

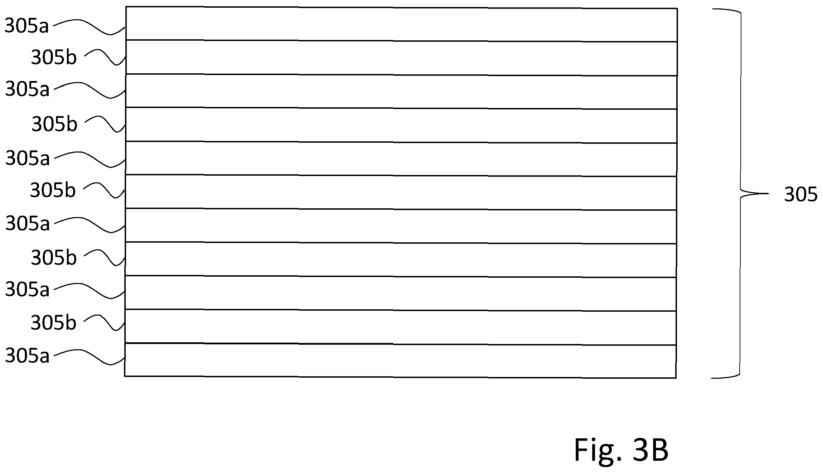

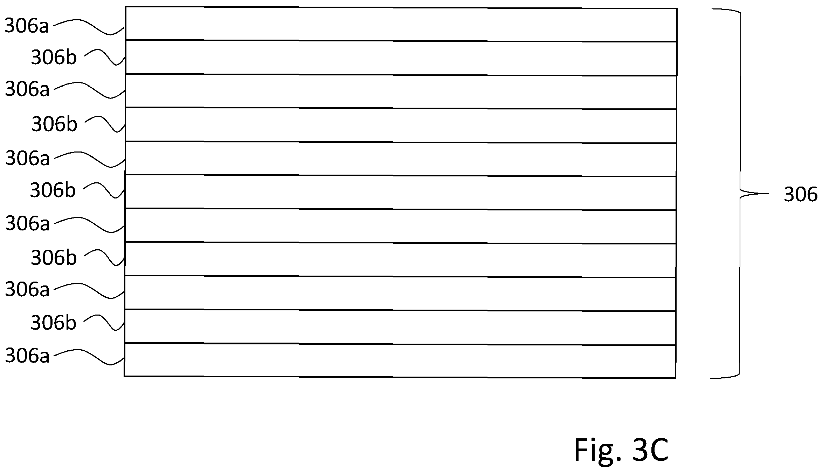

An exemplary configuration of microlayers is illustrated in Figures 3B and 3C. As shown in Figure 3B, the first set or plurality of microlayers 305 contains a total of 11 microlayers of two different types: six microlayers a first type 305a and five layers of a second type of microlayer 305b. The first and second types of microlayers are arranged in an alternating fashion, with the first type of microlayer 305a forming the first and the last microlayer of the stack. The second set or plurality of microlayers 306 may have a corresponding configuration with 11 microlayers, as shown in Figure 3C, with alternating layers of a first type of microlayer 306a and a second type of microlayer 306b, respectively, the microlayers 306a facing the other layers of the film. Hence, in embodiments, the film may comprise 22 microlayers, divided into two sets, arranged on opposite sides of the core layer. The sets of microlayers 305, 306 do not need to be identical, however they may be identical or mirror images of each other in a plane running through the core layer.

The first type of microlayer 305a, 306a of the sets 305, 306 may be of identical composition. Smilarly, the second type of microlayer 305b, 306b of the sets 305, 306 may be of identical composition. For example, each microlayer 305a, 306a may consist of mLLDPE having a density of 0.916 g/cm³ and a MFR of 4.0 g/10min (measured at 190°C). Each microlayer 305b, 306b may comprise or consist of a propylene-containing polymer as described herein, for example a random propylene ethylene copolymer having a density of 0.900 g/cm³ and a MFR of 8.0 g/10min (measured at 230°C).

A multilayer film according to the invention may be produced by conventional means, such as cast extrusion or blow extrusion. Thus, the multilayer film may be either blown or cast. A blown film has been melted and thereafter air-cooled when blown out. A cast film has been cooled over cooling rollers.

The multilayer film is preferably co-extruded, according to known methods in the art. For example, a multi-layer film according to the invention may be produced by coextrusion of from five extruders, each designated to extrude an extrudable composition that is to form one of the layers. The extruders may extrude different compositions, or at least some of the extruders may extrude the same composition. In embodiments, there may be more extruders. A multilayer film comprising microlayers as decribed herein may for instance be produced as described in WO 2018/233807 A1 with reference to Figures 5 and 6.

In addition to the polyolefin content as described herein, the film of the present invention may contain suitable conventional additives such as pigments, fillers, processing aids, tackifiers, UV stabilizers and the like. Such additives, which are familiar to persons of skill in the art of film manufacturing, may be present in any layer of the present film.

In embodiments, the multilayer film may have a thickness in the range of from 5 to 40 µm, such as from 5 to 25 µm, such as from 5 to 20 µm such as from 7 to 17 µm.

Recycled post-consumer waste polyethylene material, post-consumer recycled (PCR) waste polyethylene material and post-consumer recycled (PCR) polyethylene material are synonymous and these expressions are used herein to describe polyethylene material that has been previously incorporated into one or more products, used, and then collected and processed in a recycling process by the original manufacturer or one or more other entities to produce a PCR material. PCR polyethylene material may thus be the recycled materials, such as from flexible film polyethylene, in particular recycled stretch films. The PCR waste polyethylene material may thus originate from a resin of recycled polyethylene products.

The polymer composition of recycled post-consumer waste polyethylene material can vary depending e.g. on the source of the material. The recycled post-consumer waste polyethylene material may comprise a majority portion of polyethylene, such as LDPE. Fractions rich in shrink film are typically rich in LDPE with minor amounts of LLDPE and HDPE. Fractions rich in stretch wrap are typically rich in VLDPE and mLLDPE; and fractions rich in stretch hoods are typically rich in materials such as EVA and mLLDPE.

Recycled post-consumer waste polyethylene material typically comprises impurities. Thus, the recycled post-consumer waste polyethylene material may comprise impurities in an amount of at least 0.01%, by weight of the recycled post-consumer waste polyethylene material. Herein, the term "impurities" may refer to any material in the recycled post-consumer waste polyethylene material not being a polyethylene material. In an alternative definition, the term impurities may refer to any material in the recycled post-consumer waste polyethylene material having a density outside the range of 0.890-0.980 g/cm³ such as outside the range of 0.890-0.940 g/cm³. Examples of impurities include cellulosic fibres, dirt/dust, decomposed organic matter such as humus, polyamide materials and ethyl vinyl alcohol materials, or other polymers having a density outside the range of 0.890-0.980 g/cm³.

The recycled post-consumer waste polyethylene material may comprise impurities in an amount of 0.01-2 % by weight of the recycled post-consumer waste polyethylene material, such as in an amount of 0.01-1 %, such as in the range of 0.01-0.9 %, such as in the range of 0.01-0.8 %, such as in the range of 0.01-0.7 %, such as in the range of 0.01-0.6 %, such as in the range of 0.01-0.5 %, such as in the range of 0.01-0.4 %, such as in the range of 0.01-0.3 %, such as in the range of 0.01-0.2 %, such as in the range of 0.01-0.1 %, such as in the range of 0.1-1 %, such as in the range of 0.2-1 %, such as in the range of 0.3-1 %, such as in the range of 0.4-1 %, such as in the range of 0.5-1%, such as in the range of 0.6-1%. such as in the range of 0.7-1 %, such as in the range of 0.8-1 %, such as in the range of 0.9-1 %.

The propylene-containing polymer used in any one of the intermediate or central layers of the present film is typcally selected from the group consisting of a random propylene ethylene copolymer, a polypropylene random copolymer, a polypropylene homopolymer and a polypropylene heterophasic random copolymer. The propylene containing-polymer is typically not a recycled material, but a virgin material. The propylene-containing polymer may have a density in the range of 0.85-0.91 g/cm³, such as 0.860-0.910 g/cm³, such as 0.880-0.910 g/cm³. The propylene-containing polymer may have a melt mass-flow rate in the range of 3.0-8.0 g/10min measured at 230°C, such as in the range of 7.0-8.0 g/10min.

For example, the propylene-containing polymer may be a random propylene ethylene copolymer (RcPP) having a density of 0.900 g/cm³ and a MFR of 8.0 g/10min as measured at 230°C.

Polyethylene stretch films are commonly produced from linear low-density polyethylene (LLDPE). LLDPE is used in stretch films due to its favourable characteristics in respect of e.g. tensile strength, elongation at break and puncture resistance. The LLDPE used in stretch wrap polyethylene films can be LLDPE prepared using a Ziegler Natta or Philips type catalyst (such as metallocene LLDPE) and a comonomer, such as hexene or octene.The virgin LLDPE used in the films of the present invention typically has a density of from about 0.900 to 0.940 g/cm³, such as from 0.904 to 0.935 g/cm³. The virgin LLDPE used in the films of the present invention may have a melt mass-flow rate of from 0.3 to 4.5 g/10min (measured at 190°C), such as from 0.3 to 2.0 g/10 min, such as 0.3 to 1 g/10 min (in particular for blown films), or from 2.0 to 4.5 g/10 min (in particular for cast films).

In embodiments, the PCR polyethylene material used in the multilayer film has a weight content of linear low-density polyethylene LDPE in the range of from 0 to 10 %, or less than 10 %, such as from 0 to 5 5 or less than 5 %, based on the weight of the PCR material. The PCR material typically has a weight content of linear low-density polyethylene (LLDPE) of from 90 to 98 %, such as from 90 to 96, e.g. 92.5 % on average.

In embodiments, the multilayer film may have a machine direction elongation at break of at least 200 %, such as at least 250%, such as at least 270 %, such as at least 300 %, and up to 600 %, such as up to 550 %, such as up to 500 %, or up to 450 %, as determined according to ASTM D882. When measuring the elongation percentage at break in accordance with the ASTM D882 standard, a strip of film with a width of 20 mm is clamped between two clamps at a distance of 50 mm from each other. The film stretched at a rate of 500 mm/min until the film breaks. At least five strips of the film must be measured, and the elongation capability corresponds to the mean value of the measurements.

The maximum elongation and stretch force of the film of the present invention may also be determined using the Highlight Test Stand (Highlight Industries, Inc., USA), which is well known in the art. The Highlight Test Stand Ultimate test mimics the stretching process a film undergoes when it is used in a machine wrapping operation. The film guided over two rotating rollers, the latter of which has a higher rotational speed than the former. The difference in rotational speed leads to elongation (stretching) of the film. During the Ultimate test, the difference in rotational speed between the rollers is steadily increasing. Consequently, the elongation of the film will continuously increase, until the film breaks. The final elongation that can be reached without breaking is defined as ultimate or maximum elongation. During the measurement, the force required to increase the film elongation is monitored, and is referred to as the stretch force. For a high performance stretch film of 20 µm thickness, the stretch force at an elongation of 200 % typically is between 24 and 32 kg. The film according to the invention may have a maximum elongation as measured using the Highlight Test Stand Ultimate test of at least 325 %, such as in the range of from 325 % and up to 380 % or more, such as 400 % or more.

The multilayer film of the invention is particularly useful as high performance stretch film for wrapping of goods, such as palletized goods. Stretch wrap films are typically stretched to a certain degree by a pre-stretch mechanism before wound around the object to be wrapped. In the case of pallet wrapping, the pre-stretching is important to ensure that the film is wrapped around the goods under enough tension to secure a stable load. Hence, the films must not only have a certain stretching capacity, but also be able to withstand the tension experienced during the wrapping operation in order to be wrapped tightly around a load without breaking. In high performance stretch applications, it is desirable or required that the film is capable of pre-stretching 270 %. The inventive films were found to be useful for stretch wrapping operations involving a pre-stretch of up to 270 % and applying the film under tension.

### Examples

Films including different content of PCR-PE of varying grades were tested.

### Example 1

Five different PCR-PE materials of different origin were tested. Although the major component in all but one of these materials was LLDPE, the PCR material may also contain a significant amount of LDPE. The figures indicated in Table 1 below are based on information provided by the respective supplier. Only the LDPE content of PCR #5 was confirmed by analysis by NMR.

**Table 1. PCR materials used in the tests**

| | **PCR #1** | **PCR #2** | **PCR #3** | **PCR #4** | **PCR #5** |
|---|---|---|---|---|---|
| Density (g/cm³) | 0.93 | 0.92 | 0.92 | 0.93 | 0.92 |
| MFR (g/10min, measured at 190°C | 0.6 | 0.7 | 2.0 | 2.0 | 2.0 |
| LDPE content | >50 % | >25 % | 10-25 % | <5 % | <3 % |

The PCR materials #1 to #5 were incorporated in cast multilayers films having a structure as described above with reference to Figure 3A-C, with the composition set forth below. The film included 22 microlayers, distributed in two sets of 11 microlayers arranged on eiher side of the core layer. Each set of microlayers contained two types of microlayers in alternating arrangement.
- Cling layer: 90% mLLDPE (density 0.918 g/cm³ and MFR of 3.5 g/10min measured at 190°C) and 10% tackifier (random propylene ethylene copolymer; density 0.862 g/cm³ and MFR 9.1 g/10min measured at 190°C).
- Slip layer: mLLDPE (density 0.927 g/cm³ and MFR of 3.5 g/10min @190°C).
- Layers A, B: blend of mLLDPE and PCR (mLLDPE: density 0.918 g/cm³ and MFR of 3.5 g/10min measured at 190°C; PCR: density of 0.917 g/cm³ and MFR of 2.4 g/10min measured at 190°C).
- Microlayer type a: mLLDPE (density 0.916 g/cm³ and MFR of 4.0 g/10min measured at 190°C)
- Microlayer type b: random propylene ethylene copolymer (density 0.900 g/cm³ and MFR of 8.0 g/10min measured at 230°C).
- Core layer: blend of mLLDPE and PCR (mLLDPE: density 0.918 g/cm³ and MFR of 3.5 g/10min measured at 190°C; PCR: density of 0.917 g/cm³ and MFR of 2.4 g/10min measured at 190°C).

The PCR materials were incorporated at a content of 15 % or 30 % as outlined in Table 2 below, based on the total film weight. The reference film contained no PCR material, but only virgin raw materials. The multilayer films were subjected to testing of maximum elongation and stretch force using the Highlight Test Stand Ultimate test, and a functional wrapping test on a turntable wrapper. The characteristic of the failure upon stretching until breaking of the film was also recorded.

Also, the amount of impurities (gel level) was determined using a OCS FSP600 web inspection system on a sample film having a width of 450mm is inspected and a film length of at least 500 m. Every defect with a length or width greater than 340 µm, as calculated by the OCS software, was registered. A distinction was made between small gels (length or width <1500 µm) and large gels (length or width ≥1500 µm). The gel level is presented as the number of gels per 100 m².

The results are presented in Table 2.

**Table 1. Test results**

| **Example** | **Reference film (no PCR)** | **Film A** | **Film B** | **Film C** | **Film D (inventive)** | **Film E (inventive)** | **Film F (inventive)** |
|---|---|---|---|---|---|---|---|
| **PCR type** | - | PCR #1 | PCR #2 | PCR #3 | PCR #4 | PCR #5 | PCR #5 |
| **PCR content** | 0% | 15% | 15% | 15% | 15% | 15% | 30% |
| Maximum elongation* | 400% | 215% | 150% | 365% | 370% | 395% | 375% |
| Stretch force at 200%* (kg) | 25 | 33 | N.A. | 26 | 25 | 25 | 25 |
| Failure mechanism* | Clean and straight break | V-shaped break initiated around gel | V-shaped break initiated around gel | V-shaped break initiated around gel | Clean and straight break | Clean and straight break | Clean and straight break |
| Small gel count ** (per 100 m²) | 110 | 9800 | 17800 | 7100 | 6700 | 15000 | 24400 |
| Large gel count** (per 100 m²) | 1 | 27 | 67 | 7 | 13 | 6 | 9 |
| Wrapper test *** | Successful | N.A. | N.A. | N.A. | Successful | Successful | Successful |
| Comment | | Required elongation not reached without breaking | Required elongation not reached without breaking | Required elongation not reached, but breaks even at low tension | | | |

| | | | | | | | |
|---|---|---|---|---|---|---|---|
| * Tests performed on Highlight Test Stand ** Results obtained using OCS FSP600 *** Wrapper tests performed on Matco A600 turntable wrapper. Test is successful if pallet with sharp edges can be wrapped at pre-stretch of 270%. | | | | | | | |

As can be seen in table 2, all films A-C, containing 15 % PCR having an LDPE content of 10 % or more, failed in the wrapper test despite the fact that at least film C was found to have a maximum elongation well above 270 % using the Highlight test stand. When put to use in the wapper, all films A-C broke before reaching the required degree of prestretching of 270 %. The tests showed that the PCR #1-3 materials were deterimental to the stretch film functionality, either by reulting in a too low maximum elongation (PCR #1 and PCR #2), or by having a poor tear resistance which leads to the breaking if the pre-stretched film is tensioned (PCR #3).

In contrast, the inventive films D-F, which contained PCR having a lower LDPE content, were successful in the wrapper test. Notably, Film F contained the double amount of PCR material compared to films A-C. This difference between films D-F and films A-C is confirmed by the failure mechanism at maximum elongation: Films D, E and F show a straight and clean break, whereas Films A, B and C show a V-shaped break around a gel. The former failure mechanism indicates that the ultimate elongation of the film is reached, the latter failure mechanism indicates that the ultimate elongation is not reached and the failure mechanism is limited by the tear resistance of the film. Notably, the inventive Films D, E and F performed successfully even though these films did not contain a lesser amount of gels.

### Example 2

Films using different propylene-containing polymers to enhance the mechanical performance of the PCR-containing films were tested. Cast multilayers films were produced, having a composition as described above for Example 1 except that the all films used PCR #4 at a content of 30 %, and five different propylene-containing polymers ("PP") were used for the type b microlayer. PP #1, PP #2 and PP #3 were polypropylene random copolymers. PP #4 was a polypropylene homopolymer, and PP #5 was a polypropylene heterophasic random copolymer. All films in this example (including the reference) used the same PCR material.

**Table 3. Propylene-containing polymers used in tests**

| | **PP #1** | **PP# 2** | **PP #3** | **PP #4** | **PP #5** |
|---|---|---|---|---|---|
| Density (g/cm³) | 0.900 | 0.889 | 0.905 | 0.900 | 0.900 |
| MFR (at 230°C; g/10min) | 8.0 | 8.0 | 8.0 | 8.0 | 7.0 |
| Ethylene content | 4% | 4% | 2% | 0% | - |

The maximum elongation and stretch force were determined as described above in Example 1, and the films were subjected to a functional test using a turntable wrapper. The results are presented in Table 4.

**Table 4. Test results for films (30 % PCR) with different content of propylene-containing polymer**

| **Example** | **Reference (no PP)** | **Film P-1** | **Film P-2 (inventive)** | **Film P-3 (inventive)** | **Film P-4 (inventive)** | **Film P-5 (inventive)** | **Film P-6 (inventive)** | **Film P-7 (inventive)** |
|---|---|---|---|---|---|---|---|---|
| **Propylene polymer type** | - | PP #1 | PP #1 | PP #1 | PP #2 | PP #3 | PP #4 | PP #5 |
| **Propylene-containing polymer content* based on total film weight** | 0% | 5% | 10% | 20% | 10% | 10% | 10% | 10% |
| Maximum elongation** (%) | 280 | 320 | 370 | 360 | 330 | 380 | 325 | 325 |
| Stretch force at 200%** (kg) | 23 | 24 | 25 | 26 | 24 | 26 | 26 | 25 |
| Failure mechanism | V-shaped break initiated around gel | V-shaped break initiated around gel | Clean and straight break; ultimate elongation reached | Clean and straight break; ultimate elongation reached | Clean and straight break; ultimate elongation reached | Clean and straight break; ultimate elongation reached | Clean and straight break; ultimate elongation reached | Clean and straight break; ultimate elongation reached |
| Wrapper test ** | N.A. | N.A. | Successful | Successful | Successful | Successful | Successful | Successful |
| Comment | Required elongation not reached without breaking | Required elongation not reached without breaking | | | | | | |

| | | | | | | | | |
|---|---|---|---|---|---|---|---|---|
| * Excluding the RcPP tackifier content of the cling layer ** Tests performed on Highlight Test Stand *** Wrapper tests performed on Matco A600 turntable wrapper. Test is successful if pallet with sharp edges can be wrapped at pre-stretch of 270%. | | | | | | | | |

As shown in Table 4, it was found that a content of 10 % (based on total film weigth) of the propylene-containing polymer present in the microlayers did resulted in excellent performance as a pallet stretch wrap film.

### Example 3

The effect of using microlayers based on virgin or PCR polyethylene material was investigated. Two cast multilayer films were produced containing 10 % PCR #5, based on the total film weight. Film G had a composition similar to Film E of Example 1, however with only 10 % of PCR instead of 15 %. The PCR was contained in layers A and B and the core layer. Film H had a similar structure, but layers A, B (subskin layers) and the core layer contained only virgin materials and instead the microlayer type a consisted of PCR #5.

The films were subjected to testing of mechanical properties and a functional wrapping test on a turntable wrapper as in Examples 1 and 2. The characteristic of the failure upon stretching until breaking of the film was also recorded. The results are presented in Table 5.

**Table 5. Test results for films having PCR in different layers**

| **Example film** | **Film G** | **Film H** |
|---|---|---|
| **PCR type** | PCR #5 | PCR #5 |
| **PCR content in film** | 10 % | 10 % |
| **PCR location** | Blend with virgin LLDPE in core and subskins layers | Pure in microlayers type a |
| Maximum elongation* | 375 % | 375 % |
| Stretch force at 200%* (kg) | 23 | 23 |
| Failure mechanism * | Clean and straight break; ultimate elongation reached | Clean and straight break; ultimate elongation reached |
| Small gel count** (per 100 m²) | 14000 | 11500 |
| Large gel count** (per 100 m²) | 11 | 9 |
| Wrapper test *** | Successful | Successful |

| | | |
|---|---|---|
| * Tests performed on Highlight Test Stand ** Results obtained using OCS FSP600 *** Wrapper tests performed on Matco A600 turntable wrapper. Test is successful if pallet with sharp edges can be wrapped at pre-stretch of 270%. | | |

It was found that providing the PCR in microlayers had a beneficial effect on the gel level, and that both films could be successfully applied on a wrapper.

The person skilled in the art realizes that the present invention by no means is limited to the preferred embodiments described above. On the contrary, many modifications and variations are possible within the scope of the appended claims. For example,in multilayer films containing microlayers, it is contemplated that more than two sets of microlayers may be provided.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A multi-layer film comprising
a first outer layer,
a second outer layer,
a layer A arranged between said outer layers,
a layer B arranged between said outer layers, and
at least one central layer arranged between said layer A and layer B, wherein the film comprises
a recycled post-consumer waste material at a content of from 5 to 80 % by weight based on the total weight of the film, wherein said recycled post-consumer waste material comprises at least 80 % by weight of linear low density polyethylene (LLDPE) and from 0 % to 10 % by weight of low density polyethylene (LDPE) based on the total weight of the recycled post-consumer waste material;
at least one propylene-containing polymer selected from random propylene ethylene copolymer, a polypropylene homopolymer and a polypropylene heterophasic random copolymer, at a content of from 1 to 25 % by weight based on total weight of the film; and
a virgin linear low density polyethylene (LLDPE).

2. The multi-layer film according to claim 1, comprising said recycled post-consumer waste material at a content of from 15 to 80 %, such as from 30 to 80 % by weight based on the total weight of the film.

3. The multi-layer film according to claim 1 or 2, comprising said at least one propylene-containing polymer at a content of from 5 to 20 %, such as from 10 to 20 % by weight based on total weight of the film.

4. The multi-layer film according to any one of the preceding claims, wherein at least one of said at least one central layer, layer A and layer B comprises the recycled post-consumer waste material.

5. The multi-layer film according to any one of the preceding claims, wherein the at least one central layer comprises a layer C, a layer D, and a core layer arranged between said layers C and D.

6. The multi-layer film according to claim 5, wherein layer C comprises said at least one propylene-containing polymer.

7. The multi-layer film according to claim 5 or 6, wherein the layer C is arranged between the core layer and layer A and comprises alternating microlayers of a first type of microlayer and a second type of microlayer.

8. The multi-layer film according to any one of claims 5 to 7, wherein the layer D is arranged between the core layer and the layer B and comprises alternating microlayers of a first type of microlayer and a second type of microlayer.

9. The multilayer film according to claim 7 or 8, wherein each microlayer of the first type of microlayer comprises said at least one propylene-containing polymer at a content of at least 90 % by weight of the microlayer, such as at a content of at least 95 % by weight of the microlayer.

10. The multi-layer film according to any one of the preceding claims, wherein said at least one propylene-containing polymer has a density in the range of 0.85-0.91 g/cm³, preferably 0.87-0.91 g/cm³, more preferably 0.880-0.910 g/cm³ and most preferably 0.885-0.910 g/cm³, and/or wherein the at least one propylene-containing polymer has a melt mass-flow rate at 230 °C of 2-10 g/10min, preferably 4-10 g/10min and more preferably 6-10 g/10min.

11. The multi-layer film according to any one of the preceding claims, wherein the recycled post-consumer waste material comprises from 0 % to 5 %, or less than 5 %, by weight of LDPE based on the total weight of the recycled post-consumer waste material.

12. A method for manufacturing a multi-layer film as defined in any one of claims 1 to 11 comprising the steps of:
- providing at least one first extrudable composition comprising at least one polymer;
- providing a second extrudable composition comprising at least one polymer;
- providing a third extrudable composition comprising at least one polymer;
- providing at least one fourth extrudable composition comprising at least one polymer;
- extruding the at least one first extrudable composition to form layer A and layer B of the multilayer film;
- extruding the second extrudable composition to form the first outer layer of the multilayer film,
- extruding the third extrudable composition to form the second outer layer of the multilayer film;
- extruding the at least one fourth extrudable composition to form the at least one central layer of the multilayer film.

13. The method according to claim 13, further comprising a step of:
- providing a recycled post-consumer waste polyethylene material as defined in claim 1 or 11,
and wherein at least one polymer of at least one the extrudable composition is said recycled post-consumer waste polyethylene material.

14. Use of the film according to any one of claims 1 to 11, or the film produced by the method according to claim 12 or 13, as a stretch wrap film.

15. Use according to claim 14, wherein the film upon wrapping is stretched by at least 150 %, such as at least 200 %, such as at least 250 % relative to the unstretched film length.
